# FASCICULE DE BREVET EUROPEEN

(11) **EP 0 855 522 B1**
(45) Date de publication et mention de la délivrance du brevet: **23.07.2003**
(21) Numéro de dépôt: 98400110.7
(22) Date de dépôt: 21.01.1998
(51) Int. Cl.: F16B 5/04, F16B 5/02

(54) **Dispositif de montage réversible**
Reversible Einbauvorrichtung
Reversible mounting device

(30) Priorité: 23.01.1997 FR 9700668
(43) Date de publication de la demande: 29.07.1998
(73) Titulaire: Glaverbel France S.A., 92800 Puteaux (FR)
(72) Inventeur: Legrand, Denis, c/o PPG Industries Glass S.A., 92800 Puteaux (FR)
(74) Mandataire: Le Vaguerèse, Sylvain Jacques

(56) Documents cités:
- EP-A- 0 629 785
- US-A- 4 487 448

## Description

L'invention concerne un dispositif de montage réversible, un procédé d'assemblage et un système ainsi assemblé.

Le domaine technique de l'invention vise l'assemblage d'un élément par exemple vitre de véhicule, et d'au moins un organe rapporté tel qu'accessoire, via une structure intermédiaire telle qu'un joint d'étanchéité ou analogues.

De nombreuses techniques existent à cette fin.

Le document US-A-2.367.657 décrit des moyens d'accrochage pour fixer un tableau de bord ou un pare-chocs sur une automobile.

Un organe en caoutchouc est vulcanisé sur une feuille de métal. Les ancrages tels que vis et écrou sont considérés comme encombrants, longs à mettre en place et instables.

Dans certains cas, la longueur d'un plot est légèrement supérieure à la distance entre un épaulement d'une tête de plot et un plat, pour qu'en position de mise en place forcée, un état compressé soit obtenu.

Le document GB-A-803.296 décrit un ancrage démontable tel que bouton à pression, à logement et plot en matériau non métallique, pour l'habillement.

Le document DE-A-3 336 856 décrit un élément de fixation pour matelassage de véhicule, avec deux parties en plastique élastiquement agrafées ensembles à travers une ouverture dans la partie fixe, des orifices étant prévus pour un boulon.

Le document DE-U-85.07.143 est cité comme concernant aussi ce domaine technique.

Le document EP-A-214.459 décrit un dispositif pour la fixation d'éléments de construction en matière plastique, sur un support mince.

Le document FR-A-2.593.445 décrit un profilé à monter par agrafage élastique sur la carrosserie d'un véhicule, avec une âme tubulaire longitudinalement ouverte, en plastique dur, coextrudée avec un joint d'étanchéité en plastique mou, une membrane également en plastique mou fermant la cavité de l'âme.

Le document FR-A-2.691.759 décrit un dispositif de fixation de pièces rapportées sur un bâti de véhicule automobile, réalisé par moulage direct à partir d'une matière pouvant atteindre 95 Shore de dureté et 75 MPa en module de flexion.

Un plot de liaison portant la pièce est pourvu d'un évidement constitué, de l'extérieur vers l'intérieur, d'une première partie élargie assurant le calage de l'organe de fixation en formant moyens de blocage anti-rotation.

Une seconde partie cylindrique forme un conduit de retenue pour l'organe de fixation. Cette seconde partie est avantageusement taraudée.

Elle débouche dans une troisième partie formée d'une chambre d'encliquetage à contre-dépouille. Le fond de la chambre constitue une réserve de vissage et de matière pour les organes de fixation plus longs que l'évidement.

La liaison entre le plot et l'organe ne comporte pas de degré de liberté.

Le document EP-A-593.909 décrit un ancrage en plastique pour voiture.

Il est pourvu d'éléments de fixation élastiques afin de fixer l'ancrage dans un orifice de réception d'une partie de feuille métallique, de manière à permettre un déplacement relatif linéaire.

Du fait de ce déplacement, les tolérances de fabrication sont à même d'être compensées.

Les techniques connues présentent des inconvénients.

Les principaux sont exposés dans l'exemple particulier de vitrages surmoulés tels que montés sur des éléments de carrosserie de véhicule, par exemple automobile.

Une technique consiste à coller l'organe sur le châssis.

Des moyens de maintien du vitrage en position de fixation sont à prévoir durant la prise de la colle, par exemple par polymérisation. Ces moyens de maintien sont sophistiqués et coûteux. Cela ralentit l'assemblage du véhicule.

Généralement, les colles employées rendent les conditions de travail difficiles et/ou sont inacceptables pour l'environnement. Notamment, des vapeurs nocives sont dégagées par des colles utilisées.

La fixation obtenue par collage est irréversible. De fait, le démontage du vitrage, lors d'une réparation, ou en fin de vie du véhicule -pour recyclage- est fastidieux et peu efficace.

Sur un vitrage, la surface d'adhésion de la colle est à masquer par un bandeau opaque. Celui-ci réduit le champs de visibilité à travers le vitrage, et est souvent inesthétique.

Il est également courant d'assurer la fixation à l'aide de vis solidaires d'une part de la carrosserie, tandis qu'elles sont engagées d'autre part dans des écrous ou inserts taraudés, eux-mêmes solidaires du joint de vitrage.

Comme pour le collage, cela implique des moyens de dépose dans le moule, qui sont aussi sophistiqués et coûteux.

De plus, un écrou en insert provoque des risques de rebut, spécialement lors de la fermeture du moule.

Un encombrement souvent inacceptable est à prévoir pour le placement de ces inserts, en particulier suivant l'épaisseur perpendiculairement au vitrage.

De tels inserts augmentent les coûts et alourdissent la logistique, notamment du fait des pièces supplémentaires à conditionner et expédier.

L'invention vise à résoudre ces inconvénients notamment.

Elle permet de limiter le nombre de pièces nécessaires à la fixation, d'en réduire l'encombrement, et de simplifier la logistique à prévoir.

Grâce à l'invention, il est possible d'obtenir une fixation sûre, avec des risques limités pour l'environnement et permettant un montage ou assemblage réversible ainsi qu'aisé, par exemple pour le recyclage en fin de vie.

A cet effet, un premier objet de l'invention est un dispositif de montage réversible destiné à l'assemblage d'un élément, par exemple une vitre de véhicule, et d'au moins un organe rapporté, tel qu'un cadre de carrosserie ou un accessoire de véhicule, via une structure intermédiaire, par exemple un joint d'étanchéité ou analogues.

Deux exemples d'application de l'invention sont considérés, principalement.

Soit l'assemblage prévoit le montage de l'élément sur l'organe rapporté, comme dans le cas d'une vitre sur la carrosserie d'un véhicule.

Soit il prévoit le montage de l'organe rapporté sur l'élément, comme dans le cas d'un accessoire, tel que feu de freinage sur une vitre de véhicule.

Le dispositif comporte en combinaison :
- une structure intermédiaire en matière élastiquement déformable ;
- des moyens de fixation intermédiaire de la structure, destinés à rendre cette dernière rigidement solidaire de l'élément, par exemple une forme complémentaire à une partie correspondante de l'élément ;
- au moins une surface de positionnement et/ou d'étanchéification sur la structure, destinée à être disposée contre l'organe rapporté ;
- au moins un plot sur la structure, à fleur et/ou en saillie de la surface de positionnement, à proximité de cette dernière et/ou comportant cette surface ; le plot étant destiné à être monté avec jeu dans un évidement de l'organe rapporté ;
- au moins un espace d'expansion ménagé autour du plot ;
- au moins un orifice dans le plot, étendu suivant une direction d'introduction, et pourvu d'un logement cylindrique, de section nominale transversale sensiblement circulaire et d'arête longitudinale rectiligne, par rapport à la direction d'introduction.

Le logement est destiné à emprisonner une tige de moyens rapportés de montage sur la structure, tels que vis ou analogues, la tige présentant un filetage en biseau arrondi de section transversale, à fond de filetage sensiblement égale ou supérieure à celle du logement dans une position d'attente, c'est-à-dire au repos, avant introduction de la tige.

De la sorte, le plot est apte à l'introduction de la tige, à subir une déformation ou gonflement élastique externe prédéterminée dans l'espace d'expansion, sans blessure de l'orifice, et en particulier du logement, pour être plaqué extérieurement en appui contre l'intérieur de l'évidement.

Selon un mode de réalisation de l'invention, la structure intermédiaire est en matière élastiquement déformable telle que caoutchouc, polyuréthane dit "PU" ou polymère, notamment terpolymère d'éthylène et propylène dit "EPDM".

On prévoit par exemple une matière présentant une dureté Shore D de l'ordre de 50 à 85, et un module d'Young de l'ordre de 250 MPa.

Par exemple la structure intermédiaire est monobloc, notamment venue de moulage directement sur l'élément.

Selon un autre mode de réalisation de l'invention, les moyens de fixation intermédiaire comportent au moins un plan d'appui destiné à être placé -et éventuellement collé- contre une face de l'élément et/ou une forme concave destinée à recevoir -en l'effleurant- un flan convexe complémentaire de l'élément. Par exemple, ces moyens intermédiaires sont venus de moulage avec la structure intermédiaire.

Selon encore un autre mode de réalisation de l'invention, la structure intermédiaire comporte au moins une surface de positionnement telle que bande d'appui destinée à être sensiblement parallèle à une face de l'organe rapporté et/ou une surface d'étanchéification telle que lèvre élastiquement déformable, destinée à être disposée contre cet organe.

Dans un mode de réalisation, la structure intermédiaire est pourvue d'au moins un plot dont l'extrémité libre est à fleur d'une surface de positionnement et comporte une telle surface.

Par exemple, l'orifice du plot débouche suivant la direction d'introduction, au moins à une surface de positionnement et/ou l'espace d'expansion est exclusivement délimité par le contour externe du plot, perpendiculairement à la direction d'introduction.

Dans un autre mode de réalisation, la structure intermédiaire est pourvue d'au moins un plot en saillie d'une surface de positionnement, à proximité de cette dernière et est au moins localement séparé par l'espace d'expansion, perpendiculairement à la direction d'introduction.

Par exemple, le contour externe du plot est destiné à subir un gonflement en bourrelet, formant ainsi une partie de surface de positionnement par enserrement et/ou d'étanchéité, entre un fond de l'espace d'expansion et l'évidement de l'organe rapporté.

Suivant un mode de réalisation de l'invention, l'espace d'expansion comporte un fond sensiblement perpendiculaire à la direction d'introduction.

Par exemple, au moins un plot de la structure intermédiaire présente une forme tronconique de section transversale plus étendue en surface à proximité du fond de l'espace d'expansion qu'à son extrémité opposée suivant la direction d'introduction, où l'orifice débouche.

Eventuellement, la forme tronconique est déterminée pour subir une augmentation de son angle d'évasement lors du gonflement élastique externe prédéterminé.

Suivant un autre mode de réalisation de l'invention , au moins un orifice est pourvu d'un logement cylindrique d'arête longitudinale rectiligne sensiblement parallèle à la direction d'introduction. Par exemple, le logement est dépourvu de contre-dépouille.

Dans une réalisation, l'orifice comporte un dégagement de fond ou débouchant, destiné à ce qu'une tige de moyens de montage rapportés dans une position de serrage, ait son extrémité libre à distance d'un fond ou ouverture débouchante, suivant la direction d'introduction.

Suivant encore un mode de réalisation de l'invention, le dispositif comprend des moyens rapportés de montage tels que vis ou analogues, avec une tige à filetage destinée à être emprisonnée dans un logement de structure, suivant la direction d'introduction.

Le diamètre à fond de filetage de la tige est sensiblement égal ou supérieur au diamètre interne du logement dans une position d'attente, c'est-à-dire avant introduction de la tige.

Cette dernière est en matière synthétique ou est métallique. Une telle tige est à distinguer d'une tige dite "autotaraudeuse" qui blesse son logement au montage, et donc le fragilise.

Le filetage présente un profil en biseau arrondi, par exemple avec, en section parallèle par rapport à la direction d'introduction, depuis son extrémité libre d'introduction vers l'extrémité opposée :
- un bord droit d'attaque de filet sensiblement à 45° de l'intérieur vers l'extérieur ;
- une jonction arrondie de bords, d'un rayon de l'ordre de 0,2 à 0,3 fois le diamètre à fond de filetage, notamment de l'ordre de 0,25 fois et/ou supérieur à 2 mm ou 3 mm ; et
- un bord droit de retenue de filet, sensiblement à 15° d'un plan transversal, de l'extérieur vers l'intérieur.

Un deuxième objet de l'invention est un procédé d'assemblage d'au moins un organe rapporté tel qu'un cadre de carrosserie ou accessoire, via une structure < intermédiaire, par exemple un joint d'étanchéité pourvu d'au moins un dispositif d'assemblage réversible tel qu'évoqué, avec un élément tel que vitre de véhicule.

Le procédé comporte notamment la combinaison d'étape prévoyant de:
- introduire une tige de moyens rapportés de montage, suivant une direction d'introduction, à force et avec un mouvement de vissage, dans un logement de plot ;
- faire subir à ce dernier sous l'effet de l'introduction à force, exclusivement un gonflement élastique prédéterminé, sans blessure de l'orifice;
- plaquer ce plot sous l'effet du gonflement dans l'espace d'expansion, extérieurement en appui contre l'intérieur d'un évidement de l'organe rapporté; et éventuellement
- faire subir à une forme tronconique du plot une augmentation de son angle d'évasement lors du gonflement élastique externe prédéterminé;

Lorsque l'orifice comporte un dégagement de fond ou débouchant, la tige de moyens de montage rapportés a, en position de serrage final, son extrémité libre à distance d'un fond ou d'ouverture débouchante suivant la direction d'introduction.

Suivant un mode de réalisation du procédé selon l'invention, le contour externe du plot subit un gonflement en bourrelet, formant ainsi une partie de surface de positionnement par enserrement et/ou d'étanchéité, entre un fond de l'espace d'expansion et l'évidement de l'organe rapporté.

Un troisième objet de l'invention est un système assemblé à l'aide d'au moins un dispositif de montage et/ou suivant un procédé d'assemblage tels qu'évoqués.

Selon un mode de réalisation, le système comporte au moins : un élément par exemple plat suivant la direction d'introduction tel qu'une vitre; un joint ou analogues à la périphérie de l'élément, par exemple d'étanchéité comportant au moins un dispositif de montage réversible; et un organe rapporté tel que cadre de carrosserie de véhicule.

Suivant un mode de réalisation, le système assemblé comporte au moins : un organe rapporté par exemple un accessoire tel que feu de freinage; un élément tel que vitre, par exemple une lunette arrière de véhicule automobile; et une structure intermédiaire fixée à distance de flancs de l'élément, perpendiculairement à la direction d'introduction.

L'invention est maintenant décrite en détail en se rapportant aux dessins annexés, illustrant des exemples de réalisation.

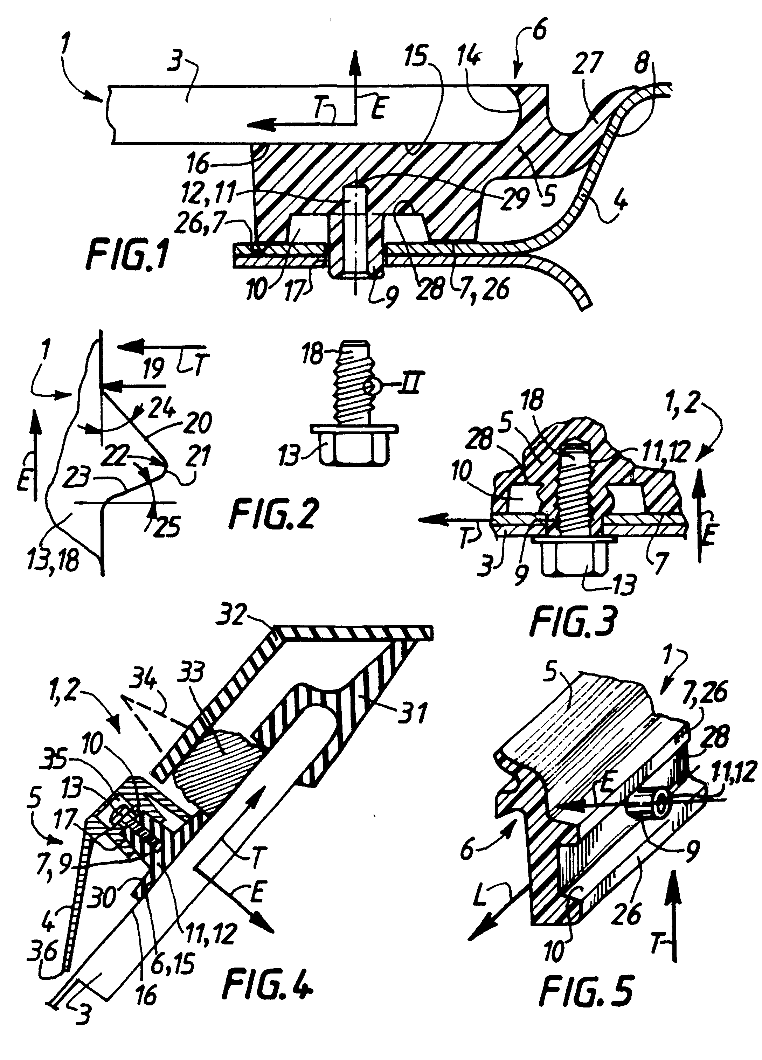

Dans les dessins, la figure 1 est une vue partielle en section d'élévation transversale d'un dispositif et d'un système selon un mode de réalisation de l'invention, en position intermédiaire d'assemblage.

La figure 2 est une vue partielle agrandie d'un détail II de la figure 1, qui illustre des moyens rapportés de montage, et leur filetage en biseau arrondi.

La figure 3 est une vue similaire à la figure 1, illustrant le dispositif en position d'assemblage final.

La figure 4 est une vue similaire à la figure 1, d'un autre mode de réalisation de l'invention, en position d'assemblage final.

Et la figure 5 est une vue partielle en perspective d'élévation transversale d'un joint d'étanchéité comportant un dispositif de montage selon l'invention.

Sur les figures, sont représentées des directions mutuellement orthogonales L, E et T.

La direction L est dite longitudinale, et la direction T transversale. Tandis que la direction E est dite d'élévation.

L'invention est décrite ici en se reportant à ces directions L, E et T.

Les constituants de l'invention sont décrits dans leurs positions et orientations courantes d'utilisation. Mais il va de soi qu'ils peuvent prendre diverses positions ou orientations.

Tel est le cas notamment pour les constituants déformables ou mobiles.

De même, les positions et orientations de stockage des constituants de l'invention peuvent être différentes.

Ces positions et orientations sont donc indiquées uniquement à titre explicatif.

Il est précisé ici que les termes "inférieur" et "supérieurs" sont considérés suivant la direction d'élévation E, respectivement comme indiquant un emplacement bas et haut.

Il en va de même des termes "intérieur" et "extérieur".

Les termes "élévation", "longitudinalement" et "transversalement" se rapportent aux directions correspondantes.

Dans la suite de la description, les termes "d'élévation" et "d'introduction" seront indifféremment employés, concernant la direction E.

La référence générale 1 désigne un dispositif de montage réversible.

La référence générale 2 désigne quant à elle, un système assemblé.

Le dispositif 1 est destiné à l'assemblage d'une part d'un élément 3, et d'autre part, d'au moins un organe rapporté 4 via une structure intermédiaire 5.

Le système 2 comprend donc l'élément 3, l'organe 4 rapporté, et la structure intermédiaire 5, notamment.

Le dispositif de montage 1 comporte principalement:
- la structure 5 qui est en matière élastiquement déformable;
- des moyens de fixation 6 intermédiaires de la structure 5;
- au moins une surface de positionnement 7 et/ou d'étanchéification 8 sur la structure 5;
- au moins un plot 9 sur la structure 5;
- au moins un espace d'expansion 10 ménagé autour du plot 9;
- au moins un orifice 11 dans le plot 9, étendu suivant la direction d'introduction E, pourvu d'un logement 12 cylindrique; et
- des moyens rapportés 13 de montage tels que vis ou analogues.

Les moyens de fixation 6 sont destinés à rendre l'élément 3 rigidement solidaire de la structure intermédiaire.

Selon les cas, l'élément 3 fait office de support, comme sur la figure 4, ou est supporté.

Tel est le cas de l'exemple des figures 1 à 3 -et de la figure 5, qui s'y rapporte-. Ce mode de réalisation est décrit en premier.

Il va de soi que les mêmes références désignent des constituants identiques ou similaires, dans les différents modes de réalisation.

Le premier mode de réalisation de l'invention permet l'assemblage de l'élément 3, ici une vitre de véhicule sur un organe rapporté 4, ici un cadre de carrosserie, via la structure intermédiaire 5, dans cet exemple, un joint d'étanchéité.

Les moyens de fixation intermédiaire 6 de la structure 5 sont destinés à rendre cette dernière rigidement solidaire de l'élément 3 par liaison de formes complémentaires à des parties correspondantes de l'élément 3.

Généralement, cette fixation intermédiaire est effectuée préalablement à l'assemblage, et donc au montage à l'aide du dispositif 1.

Sur la figure 1, la structure ou joint 5 peut être surmoulé sur la vitre formant l'élément 3.

Dans cet exemple, le joint 5 comporte une surface concave 14 dite "forme", qui affleure un flan périphérique de la vitre 3, de forme complémentaire convexe.

Une surface dite "plan d'appui" 15 sensiblement plane du joint 5 fait partie des moyens de fixation intermédiaire 6. La surface 15 est complémentaire à une face interne de la vitre 3, et plus précisément de son bord périphérique longitudinal et transversal.

La fixation est prévue en appposant sur ce bord périphérique interne une couche primaire 16, par sérigraphie ou analogues. Puis, lors du surmoulage du joint 5, la matière de ce dernier réagit avec la couche primaire et engendre la fixation intermédiaire et active le collage.

Dans les réalisations non illustrées, le joint 5 est directement surmoulé sur la vitre 3. En alternative, il est monté à l'aide de moyens 6 mécaniques, par exemple d'enserrement ou d'adhésion par apport lors de la fixation.

Sur la figure 5 -comme sur la figure 4- la structure intermédiaire est monobloc.

Cette structure intermédiaire ou joint 5 est en matière élastiquement déformable telle que caoutchouc, polyuréthane dit "PU" ou polymère, notamment terpolymère d'éthylène et propylène dit "EPDM".

Dans cet exemple la matière présente une dureté Shore D de l'ordre de 50 à 85, et un module d'Young de l'ordre de 250 MPa.

Sur les figures 1, 3, 5, le plot 9 de la structure 5 est en saillie de la surface de positionnement 7 suivant la direction E.

Le plot 9 est monté avec jeu dans un évidement 17 de l'organe rapporté 4, en position intermédiaire d'assemblage (figure 1).

La figure 5 montre bien que l'espace d'expansion 10 est ménagé autour du plot 9, suivant les directions L et T.

Le logement 12 est cylindrique, de section transversalement à la direction d'introduction E, sensiblement circulaire et d'arête longitudinale rectiligne.

Le logement 12 est destiné à emprisonner une tige 18 des moyens rapportés 13 de montage, ici une vis.

La figure 2 montre que la tige 18 présente un filetage en biseau arrondi. Sa section transversale 19 à fond de filetage est sensiblement égale ou supérieure à celle du logement dans une position d'attente, c'est-à-dire au repos, avant introduction de la tige 18.

A l'introduction de la tige 18, le logement 12 subit une déformation élastique externe prédéterminée, sans blessure de l'orifice.

Cette déformation emprisonne la vis des moyens 13, sans fragiliser la structure 5, notamment par des coupures.

La tige 18 à emprisonner dans le logement 12 de la structure 5, suivant la direction d'introduction E, et plus largement la vis des moyens 13, est en matière synthétique ou est métallique. Une telle tige 18 est à distinguer d'une tige dite "autotaraudeuse" qui blesse son logement au montage, et donc le fragilise.

La figure 2 détaille le profil du filetage en biseau arrondi, en section parallèle par rapport à la direction d'introduction E. Depuis son extrémité libre d'introduction vers l'extrémité opposée, ici une tête à six pans 19, le profil présente :
- un bord droit 20 d'attaque du filet sensiblement à 45° de l'intérieur vers l'extérieur ;
- une jonction arrondie 21 de bords, d'un rayon 22 de l'ordre de 0,2 à 0,3 fois le diamètre à fond de filetage, notamment de l'ordre de 0,25 fois et supérieur à 2 mm ou 3 mm ; et
- un bord droit 23 de retenue de filet, sensiblement à 15° d'un plan transversal, de l'extérieur vers l'intérieur.

L'angle entre la direction E et le bord d'attaque 20 est désigné en 24, tandis que celui entre le bord de retenue 23 et un plan transversal -donc perpendiculaire à la direction E, ainsi que parallèle à la direction T et à la direction L- est désigné en 25.

La tête de vis 19 est destinée à enserrer l'organe 4, en appui contre ce dernier.

Sur les figures 1 et 5, la structure intermédiaire 5 comporte deux surfaces de positionnement 7, ici des bandes d'appui 26, destinées à être sensiblement parallèles à une face externe de l'organe rapporté 4.

Une surface d'étanchéification 27, ici une lèvre élastiquement déformable est destinée à être disposée contre cet organe 4.

Les surfaces 7 sont étendues sensiblement perpendicualirement à la direction E, suivant la périphérie de la vitre 3 et donc localement suivant les directions L et T, notamment.

Ici, l'orifice 12 débouche suivant la direction d'introduction E à distance des bandes 26 et l'espace d'expansion 10 est exclusivement délimité par le contour externe du plot 9, perpendiculairement à la direction d'introduction E. Cet espace 10 entoure donc le plot 9.

Sur les figures 1, 3 et 5, l'espace d'expansion 10 comporte un fond 28 sensiblement perpendiculaire à la direction d'introduction E.

Tandis que le plot 9 présente une forme tronconique de section transversale plus étendue en surface à proximité du fond 28, l'espace d'expansion qu'à son extrémité opposée suivant la direction d'introduction, où l'orifice 11 débouche.

On voit plus loin que cette forme tronconique est déterminée pour subir une augmentation de son angle d'évasement lors du gonflement élastique externe prédéterminé.

Il est souligné que le logement 12 est ici d'arête longitudinale rectiligne sensiblement parallèle à la direction d'introduction E et dépourvu de contre-dépouille.

En outre, l'orifice 11 comporte un dégagement de fond 29, destiné à ce que la tige 18 de moyens de montage 13, dans une position de serrage -comme sur les figures 3 et 4-, ait son extrémité libre à distance de ce fond 28, suivant la direction d'introduction E.

Des modes de réalisation non illustrés prévoient que l'orifice 11 soit débouchant à la surface 15 en regard de l'élément 3.

Le mode de réalisation de la figure 4 permet le montage sur une lunette arrière formant l'élément 3, d'un feu de freinage ou "troisième feu stop" formant l'organe rapporté 4.

La structure intermédiaire 5 comporte ici une seule surface 7 de positionnement et d'étanchéification, qui définit le contour tronconique du plot 9.

Dans l'exemple illustré, la structure 5 et le joint 31 sont obtenus par injection simultanée dans un même moule, où est enfermée la vitre 3.

Bien sûr, la structure 5 et le joint 31 peuvent être obtenus distinctement.

Par rapport à la direction E, l'angle de la surface 7 depuis l'élément 3 vers l'extrémité libre -extérieure- du plot, est de l'ordre de 5° à 10°.

Le plot 9 est ici à fleur de la surface de positionnement 7, et comporte cette surface. En outre, l'organe 4 prend appui suivant la direction E, contre une surface 30 dont saille le plot 9.

Le plot 9 est destiné à être monté avec jeu dans un évidement 17 de l'organe 4, de forme similaire mais de section légèrement supérieure, au repos.

La structure intermédiaire 5 est ici un pion monobloc fixé sur l'élément 3 par les moyens 6.

Le pion ou structure 5 comporte un plan d'appui 15 placé contre une face de l'élément 3, une couche 16 étant interposée.

Dans le deuxième mode de réalisation de la figure 4, le pion 5 est pourvu d'au moins un plot 9, dont l'extrémité libre est perpendiculaire à la direction E.

En section parallèlement à la direction E, le pion 5 est généralement en forme de "T" renversé.

Le plot 9 forme la tige du "T". Tandis que sa barre est délimitée par la surface 30 vers l'extérieur et par sa face d'appui 15 vers l'intérieur.

L'orifice 11 du plot 9 débouche suivant la direction E d'introduction, à cette extrémité libre.

En position d'assemblage, l'espace d'expansion 10 est délimité par le contour externe du plot 9, perpendiculairement à la direction d'introduction E, et par l'extrémité libre du plot 9 ainsi que le fond de l'évidement 17, lui-même perpendiculaire à la direction E.

L'évidement 17 forme ici une douille creuse tronconique, avec un passage dans son fond pour la tige (18) de la vis des moyens rapportés de montage 13.

Cet évidement 17 est monobloc avec le couvercle en résine rigide translucide qui forme l'organe 4, sur la figure 4.

Le passage de tige débouche, à l'opposé de l'évidement 17 suvant la direction E, dans une cavité 35 de l'organe 4, permettant de loger et d'escamoter les moyens 13, en particulier la tête de vis, ici à empreinte concave cruciforme.

La vitre 3 comporte un joint périphérique 31, et est rigidement fixée sur un cadre de carrosserie 32, par un cordon de colle 33.

La forme initiale du cordon 33, avant fixation de la vitre 3 sur le cadre 32, est illustrée en trait discontinu et désignée en 34.

En alternative, le joint 31 est pourvu de dispositifs de montage 1 pour l'assemblage de la vitre 3, sur le cadre 32.

Un rebord périphérique 36 de l'organe 4 est soit prévu pour être plaqué localement contre la face interne de la vitre 3, et contre la surface 30, de façon sensiblement étanche.

Soit, on prévoit un jeu entre la vitre 3 et le capot 4, comme illustré.

Le procédé d'assemblage est décrit.

Considérons que la structure 5 et l'élément 3 sont fixés rigidement par les moyens 6.

L'élément 3 et la structure 5 fixés sont rapprochés de l'organe 4, suivant la direction E, jusqu'à atteindre la position intermédiaire d'assemblage (figure 1).

Alors, chaque plot 9 est disposé dans un évidement 17 correspondant de l'organe 4. Tandis que les surfaces 7 sont placées contre des parties appropriées de l'organe 4.

Certaines surfaces, comme la lèvre 27, subissent dans cette position, une déformation d'étanchéité primaire.

Puis, une vis des moyens 13 est rapportée, avec l'extrémité libre de la tige 18 à l'extrémité débouchante - externe- dans chaque orifice 11, suivant la direction E seulement, dans un premier temps.

Dans un deuxième temps, le procédé comporte la combinaison d'étapes prévoyant de:
- introduire une tige 18 de moyens rapportés 13 de montage, suivant la direction d'introduction E, à force et avec un mouvement de vissage, dans le logement 12;
- faire subir au plot 9 sous l'effet de l'introduction à force, exclusivement un gonflement élastique prédéterminé, sans blessure de logement 12;
- plaquer sous l'effet du gonflement dans l'espace d'expansion 10, le plot 9 extérieurement en appui contre l'intérieur de l'évidement; et le cas échéant,
- faire subir à la forme tronconique du plot 9 une augmentation de son angle d'évasement lors du gonflement élastique externe prédéterminé.

L'orifice 11 comportant un dégagement 29 de fond, la tige 18 des moyens de montage 13 a en position de serrage final, son extrémité libre à distance du fond de l'orifice 11, suivant la direction d'introduction E.

La figure 3 montre que le contour externe du plot 9 subit un gonflement en bourrelet, formant ainsi une partie de surface de positionnement 7 par enserrement et d'étanchéité secondaire, entre le fond de l'espace d'expansion 10 et l'évidement 17.

On obtient ainsi un système assemblé 2 à l'aide d'au moins un dispositif d'assemblage 1.

Il est à noter que le gonflement dans l'espace 10 évite en outre les "crissements" indésirables au sein d'un assemblage.

## Revendications

1. Dispositif (1) de montage réversible destiné à l'assemblage d'un élément (3), avec au moins un organe (4) rapporté, via une structure intermédiaire (5), **caractérisé en ce qu'**il comporte en combinaison :
- une structure (5) en matière élastiquement déformable ;
- des moyens (6) de fixation intermédiaire de la structure (5), destinés à rendre l'élément rigidement solidaire de cette structure ;
- au moins une surface (7) de positionnement et/ou d'étanchéification sur la structure (5), destinée à être disposée contre l'organe (4) ;
- au moins un plot (9) sur la structure (5), à fleur et/ou en saillie de la surface de positionnement (7), à proximité de cette dernière et/ou comportant cette surface ; le plot (9) étant destiné à être monté avec jeu dans un évidement (17) de l'organe (4) ;
- au moins un espace d'expansion (10) ménagé autour du plot (9) ;
- au moins un orifice (11) dans le plot (9), étendu suivant une direction d'introduction (E), et pourvu d'un logement (12) cylindrique, sensiblement de section transversale circulaire et d'arête longitudinale rectiligne, par rapport à la direction d'introduction E ;
le logement (12) étant destiné à emprisonner une tige (18) de moyens rapportés (13) de montage tels que vis ou analogues, la tige (18) présentant un filetage en biseau arrondi de section transversale, sensiblement égale ou supérieure à celle du logement (12) ; de sorte que le plot (9) est apte à l'introduction de la tige (18), à subir une déformation élastique externe prédéterminée dans l'espace d'expansion (10), sans blessure de l'orifice (12), et à être plaqué extérieurement en appui contre l'intérieur de l'évidement (17).

2. Dispositif (1) selon la revendication 1, **caractérisé en ce que** la structure (5) est en matière élastiquement déformable telle que caoutchouc, polyuréthane dit "PU" ou polymère tel que terpolymère d'éthylène et propylène dit "EPDM", par exemple la structure (5) est monobloc, éventuellement venue de moulage directement sur l'élément (3).

3. Dispositif (1) selon la revendication 1 ou 2, **caractérisé en ce que** les moyens de fixation intermédiaire (6) comportent au moins un plan d'appui (15) destiné à être placé contre une face de l'élément (3) et/ou une forme concave (14) destinée à recevoir un flan convexe complémentaire de l'élément (3).

4. Dispositif (1) selon l'une des revendications 1 à 3, **caractérisé en ce que** la structure (5) comporte au moins une surface de positionnement (7) telle que bande d'appui (26) destinée à être sensiblement parallèle à une face de l'organe rapporté (4) et/ou une surface d'étanchéification (27) telle que lèvre élastiquement déformable, destinée à être disposée contre l'organe (4).

5. Dispositif (1) selon l'une des revendications 1 à 4, **caractérisé en ce que** la structure est pourvue d'au moins un plot (9) à fleur et comportant la par exemple l'orifice (11) du plot (9) débouche suivant la direction d'introduction (E), au moins à la surface de positionnement (7) et/ou l'espace d'expansion (10) est exclusivement délimité par le contour externe du plot (9), perpendiculairement à la direction d'introduction (E).

6. Dispositif (1) selon l'une des revendications 1 à 5, **caractérisé en ce que** la structure (5) est pourvue d'au moins un plot (9) en saillie d'une surface de positionnement (7), à proximité de cette dernière et en étant au moins localement séparé par l'espace d'expansion (10), par exemple, le contour externe du plot est destiné à subir un gonflement en bourrelet, formant ainsi une partie de surface de positionnement (7) par enserrement et/ou d'étanchéité, entre un fond de l'espace d'expansion (10) et l'évidement (17) en position de serrage.

7. Dispositif (1) selon l'une des revendications 1 à 6, **caractérisé en ce que** l'espace d'expansion (10) comporte un fond (28) sensiblement perpendiculaire à la direction d'introduction (E), par exemple, au moins un plot (9) présente une forme tronconique de section transversale plus étendue en surface à proximité du fond (28) de l'espace d'expansion (10) qu'à son extrémité opposée suivant la direction d'introduction (E), où l'orifice débouche, éventuellement, la forme tronconique est déterminée pour subir une augmentation de son angle d'évasement lors du gonflement élastique externe prédéterminé.

8. Dispositif (1) selon l'une des revendications 1 à 7, **caractérisé en ce qu'**au moins un orifice (11) est pourvu d'un logement cylindrique (12) d'arête longitudinale rectiligne sensiblement parallèle à la direction d'introduction (E), par exemple, le logement (12) est dépourvu de contre-dépouille et/ou comporte un dégagement de fond ou débouchant, destiné à ce qu'une tige (18) de moyens de montage rapportés (13) ait en position de serrage, son extrémité libre à distance d'un fond ou ouverture débouchante, suivant la direction d'introduction (E).

9. Dispositif (1) selon l'une quelconque dese revendications 1 à 8, **caractérisé en ce qu'**il comprend des moyens rapportés de montage (13) tels que vis ou analogues, avec une tige (18) destinée à être emprisonnée dans un logement (12) suivant la direction d'introduction (E), le filetage présentant en section parallèle un profil en biseau arrondi, par exemple son extrémité libre d'introduction vers l'extrémité opposée :
- un bord d'attaque (20) de filet sensiblement à 45° de l'intérieur vers l'extérieur ;
- une jonction (21) de bords d'un rayon (22) de l'ordre de 0,2 à 0,3 fois le diamètre, notamment de l'ordre de 0,25 fois et/ou supérieur à 2 mm ou 3 mm ; et
- un bord de retenue (23) de filet, sensiblement à 15° d'un plan transversal, de l'extérieur vers l'intérieur.

10. Procédé d'assemblage d'au moins un organe rapporté (4) via une structure intermédiaire (5) comportant un dispositif de montage (1) réversible selon l'un des revendications 1 à 9, sur un élément (3), **caractérisé en ce qu'**il comporte en combinaison, les étapes prévoyant de :
- introduire une tige (18) de moyens rapportés (13) de montage, suivant une direction d'introduction (E), à force et avec un mouvement de vissage, dans un plot (9) du dispositif (1) ;
- faire subir à ce dernier (9) sous l'effet de l'introduction à force, exclusivement un gonflement élastique prédéterminé, sans blessure de l'orifice (12) ;
- plaquer ce plot sous l'effet du gonflement dans l'espace d'expansion (10), le plot (9) extérieurement en appui contre l'intérieur d'un évidement (17) ; et éventuellement
- faire subir à une forme tronconique du plot (9) une augmentation de son angle d'évasement lors du gonflement élastique externe prédéterminé ;
tandis que l'orifice (12) comportant un dégagement de fond ou débouchant, la tige (18) a en position de serrage final, son extrémité libre à distance d'un fond ou d'ouverture débouchante suivant la direction d'introduction (E).

11. Procédé selon la revendication 10, **caractérisé en ce que** le contour externe du plot (9) subit un gonflement en bourrelet, formant ainsi une partie de surface de positionnement (7) par enserrement et/ou d'étanchéité, entre un fond de l'espace d'expansion et l'évidement (17).

12. Système (2) assemblé à l'aide d'au moins un dispositif (1) selon l'une des revendications 1 à 9 et/ou suivant un procédé selon la revendication 10 ou 11, **caractérisé en ce qu'**il comporte au moins : un organe rapporté (4) par exemple un cadre de carrosserie ou accessoire de véhicule ; une structure intermédiaire, par exemple d'étanchéité comportant le dispositif (1) réversible ; et un élément (3) tel que vitre, par exemple lunette arrière de véhicule.

## Patentansprüche

1. Reversible Montage- bzw. Einbauvorrichtung (1), die zum Zusammenbau eines Elements (3) mit wenigstens einem zugehörigen bzw. zusammengesetzten Organ (4) über eine Zwischenstruktur (5) bestimmt ist, **dadurch gekennzeichnet, daß** sie in Kombination umfaßt:
- eine Struktur (5) aus elastisch deformierbarem Material;
- zwischenliegende Festlegungsmittel (6) der Struktur (5), die dazu bestimmt sind, das Element starr einstückig mit dieser Struktur zu machen;
- wenigstens eine Positionier- und/oder Dichtfläche bzw. -oberfläche (7) auf der Struktur (5), die dazu bestimmt ist, gegen das Organ (4) angeordnet zu werden;
- wenigstens eine Steckstelle bzw. Stift (9) auf der Struktur (5) bündig und/oder vorspringend von der Positionieroberfläche (7) in Nachbarschaft von der letzteren und/oder umfassend diese Oberfläche; wobei die Steckstelle (9) dazu bestimmt ist, mit Spiel in einer Ausnehmung (17) des Organs (4) festgelegt zu sein;
- wenigstens einen Expansions- bzw. Ausdehnungsraum (10), der um die Steckstelle (9) vorgesehen ist;
- wenigstens eine Öffnung bzw. ein Loch (11) in der Steckstelle (9), die (das) sich entlang einer Einsetz- bzw. Einführrichtung (E) erstreckt und mit einer zylindrischen Aufnahme bzw. Lagerung (12) mit im wesentlichen in Querrichtung kreisförmigem Querschnitt und einer längsverlaufenden rechteckigen Kante in Bezug auf die Einfuhrrichtung (E) versehen ist;
wobei das Lager bzw. die Lagerung (12) dazu bestimmt ist, einen Schaft bzw. Stange (18) der zugehörigen Festlegungsmittel (13), wie Schrauben oder dgl., aufzunehmen, wobei der Schaft (18) ein Gewinde mit im Querschnitt abgerundeter Abschrägung aufweist, welches im wesentlichen gleich oder über jenem des Lagers (12) ist; so daß die Steckstelle (9) beim Einsetzen des Schafts (18) fähig ist, einer vordefinierten, externen, elastischen Deformation in dem Expansionsraum (10) ohne Verletzung bzw. Beschädigung des Loches (12) zu unterliegen und nach außen gegen das Innere der Ausnehmung (17) in Anlage gebracht zu werden.

2. Vorrichtung (1) nach Anspruch 1, **dadurch gekennzeichnet, daß** die Struktur (5) aus elastisch deformierbarem Material, wie Kautschuk, Polyurethan, "PU" genannt, oder Polymer gebildet ist, wie einem Ethylen- und Polypropylen-Terpolymer, welches "EPDM" genannt ist, wobei die Struktur (5) beispielsweise ein Monoblock ist, der gegebenenfalls direkt auf das Element (3) geformt ist.

3. Vorrichtung (1) nach Anspruch 1 oder 2, **dadurch gekennzeichnet, daß** die zwischenliegenden Festlegungsmittel (6) wenigstens eine Abstützfläche bzw. -ebene (15), die dazu bestimmt ist, gegen eine Seite bzw. Fläche des Elements (3) angeordnet zu sein, und/oder eine konkave Form (14) umfassen, welche dazu bestimmt ist, einen zu dem Element (3) komplementären, konvexen Zuschnitt aufzunehmen.

4. Vorrichtung (1) nach einem der Ansprüche 1 bis 3, **dadurch gekennzeichnet, daß** die Struktur (5) wenigstens eine Positionierfläche bzw. -oberfläche (7) umfaßt, wie einen Abstützstreifen bzw. -band (26), der dazu bestimmt ist, im wesentlichen parallel zu einer Seite des zugehörigen Organs (4) zu liegen, und/oder eine Dichtoberfläche (27), wie eine elastisch deformierbare Lippe, die dazu bestimmt ist, gegen das Organ (4) in Anlage gebracht zu werden.

5. Vorrichtung (1) nach einem der Ansprüche 1 bis 4, **dadurch gekennzeichnet, daß** die Struktur mit wenigstens einer bündigen Steckstelle bzw. Stift (9) und hier beispielsweise umfassend die Öffnung (11) der Steckstelle (9) versehen ist, die entsprechend der Einführrichtung (E) wenigstens an der Positionieroberfläche (7) mündet, und/oder der Expansionsraum (10) ausschließlich durch die Außenkontur der Steckstelle (9) senkrecht auf die Einfuhrrichtung (E) begrenzt ist.

6. Vorrichtung (1) nach einem der Ansprüche 1 bis 5, **dadurch gekennzeichnet, daß** die Struktur (5) mit wenigstens einer Steckstelle bzw. Stift (9) vorspringend über die Positionierfläche bzw. -oberfläche (7) in der Nachbarschaft der letzteren versehen ist, und wenigstens örtlich davon beispielsweise durch den Expansionsraum getrennt, die Außenkontur der Steckstelle dazu bestimmt ist, einer wulstförmigen Verdickung bzw. Ausdehnung zu unterliegen, welche so einen Teil der Positionieroberfläche (7) durch Einspannen und/oder als Abdichtung bildet, und zwar zwischen einem Grund bzw. Boden des Expansionsraums (10) und der Ausnehmung (17) in der Einspannposition.

7. Vorrichtung (1) nach einem der Ansprüche 1 bis 6, **dadurch gekennzeichnet, daß** der Expansionsraum (10) einen Boden (28) beispielsweise im wesentlichen senkrecht zu der Einführrichtung (E) umfaßt, wenigstens eine Steckstelle bzw. Stift (9) eine Kegelstumpfform im Querschnitt aufweist, der in der Nähe des Bodens (28) des Expansionsraumes (10) ausgedehnter in der Oberfläche als an seiner gegenüberliegenden Oberfläche in der Einfuhrrichtung (E) ist, wo das Loch mündet, gegebenenfalls die kegelstumpfförmige Form dazu bestimmt ist, eine Vergrößerung ihres Kegelwinkels während dem vorbestimmten, äußeren, elastischen Aufweiten zu erleiden.

8. Vorrichtung (1) nach einem der Ansprüche 1 bis 7, **dadurch gekennzeichnet, daß** wenigstens ein Loch (11) in einem zylindrischen Lager (12) mit rechteckiger Längskante vorgesehen ist, die beispielsweise im wesentlichen zu der Einfuhrrichtung (E) parallel ist, das Lager (12) mit einem Hinterschnitt versehen ist und/oder eine Ausnehmung des Bodens umfaßt, wo es mündet, welches dazu bestimmt ist, daß sich ein Schaft (18) der zugehörigen Montagemittel (13) in einer Festschraubposition befindet, wobei sein freies Ende in Abstand von einem Boden oder einer mündenden Öffnung der Einführrichtung (E) entspricht.

9. Vorrichtung (1) nach einem der Ansprüche 1 bis 8, **dadurch gekennzeichnet, daß** sie zugehörige Montagemittel (13), wie Schrauben oder dgl., umfaßt, mit einem Schaft bzw. Stange (18), der dazu bestimmt ist, in einem Lager (12) entsprechend bzw. entlang der Einführrichtung (E) aufgenommen zu werden, wobei das Gewinde im Parallelschnitt ein Profil mit abgerundeter Abschrägung aufweist, wobei beispielsweise sein Ende frei ist für ein Einführen zum gegenüberliegenden bzw. entgegengesetzten Ende:
- eine Anlegekante (20) des Gewindes im wesentlichen unter 45° von innen nach außen;
- eine Verbindung (21) der Ränder mit einem Radius (22) in der Größenordnung von 0,2 bis 0,3 mal dem Durchmesser, insbesondere in der Größenordnung von 0,25 mal und/oder über 2 mm oder 3 mm; und
- eine Rückhaltekante (23) des Gewindes im wesentlichen unter 15° zu einer querverlaufenden Ebene von außen nach innen.

10. Verfahren zum Zusammenbau von wenigstens einem zugehörigen bzw. zusammengesetzten Organ (4) über eine Zwischenstruktur (5), umfassend eine reversible Einbauvorrichtung (1) gemäß einem der Ansprüche 1 bis 9, auf einem Element (3), **dadurch gekennzeichnet, daß** es in Kombination die Schritte umfaßt:
- Einführen eines Schafts bzw. Stange (18) von zugehörigen Montagemitteln (13) entlang einer Einsetz- bzw. Einführrichtung (E) unter Kraft und mit einer Schraubbewegung in eine Steckstelle bzw. Stift (9) der Vorrichtung (1);
- Bewirken, daß die letztere (9) unter der Wirkung des Einbringens mit Kraft ausschließlich eine vorbestimmte elastische Aufweitung ohne Verletzung des Loches bzw. der Öffnung (12) erleidet;
- An- bzw. Aufbringen bzw. Plattieren bzw. Überfangen dieser Steckstelle unter der Wirkung des Aufweitens in dem Expansionsraum (10), wobei die Steckstelle (9) außen in Anschlag gegen das Innere einer Ausnehmung (17) gelangt; und gegebenenfalls
- Bewirken, daß eine kegelstumpfförmige Form der Steckstelle (9) eine Vergrößerung ihres Kegelwinkels während der vorbestimmten, äußeren, elastischen Aufweitung erleidet;
wobei das Loch (12) eine Ausnehmung des Bodens umfaßt oder mündet, und, wenn der Schaft (18) an einer Position einer endgültigen Verschraubung ist, sein freies Ende in Abstand entlang der Einbringrichtung (E) von einem Boden oder der Öffnung ist.

11. Verfahren nach Anspruch 10, **dadurch gekennzeichnet, daß** die Außenkontur der Steckstelle (9) eine Wulstaufweitung erleidet, welche so einen Teil der Positionieroberfläche (7) durch Einspannen und/oder Dichten ausbildet, und zwar zwischen einem Boden des Expansionsraums und der Ausnehmung (17).

12. System (2), das mit Hilfe wenigstens einer Vorrichtung (1) gemäß einem der Ansprüche 1 bis 9 und/oder entsprechend einem Verfahren nach dem Anspruch 10 oder 11 zusammengebaut ist, **dadurch gekennzeichnet, daß** es wenigstens umfaßt: ein zugehöriges bzw. zusammengesetztes Organ (4), beispielsweise einen Karosserierahmen oder einen Fahrzeugbestandteil; eine Zwischenstruktur, beispielsweise zur Dichtung, umfassend die reversible Vorrichtung (1); und ein Element (3), wie eine Scheibe, beispielsweise eine Heckscheibe des Fahrzeugs.

## Claims

1. Reversible mounting device (1) intended for the assembly of an element (3), with at least one related component (4) via an intermediate structure (5), **characterised in that** it comprises in combination:
■ a structure (5) made of elastically deformable material;
■ intermediate fixing means (6) for the structure (5) for rigidly integrating the element with this structure;
■ at least one surface (7) for positioning and/or sealing on the structure (5) intended for placement against the component (4);
■ at least one socket (9) on the structure (5) flush with and/or projecting from the positioning surface (7), close to the latter and/or containing this surface, said socket (9) being intended for installation with play in a recess (17) of the component (4);
■ at least one expansion space (10) arranged around the socket (9);
■ at least one opening (11) in the socket (9) extending in a direction of insertion (E) and provided with a cylindrical housing (12) with an essentially circular cross-section and a longitudinal edge that is rectilinear in relation to the direction of insertion E; said housing (12) being intended to restrain a shank (18) of related mounting means (13) such as screws or similar, said shank (18) having a thread with rounded bevelled edges with a cross-section essentially equal to or greater than that of the housing (12), such that on insertion of the shank (18) the socket (9) is able to undergo a predetermined external elastic deformation into the expansion space (10) without damaging the opening (12), and to be held outwardly in abutment against the interior of the recess (17).

2. Device (1) according to Claim 1, **characterised in that** the structure (5) is made of elastically deformable material such as rubber, polyurethane ("PU") or polymer such as ethylene-propylene terpolymer ("EPDM"), for example, the structure (5) is of a single block, possibly being moulded directly onto the element (3).

3. Device (1) according to Claim 1 or 2, **characterised in that** the intermediate fixing means (6) have at least one abutment face (15) to be placed against a face of the element (3) and/or a concave shape (14) intended to receive a complementary convex blank of the element (3).

4. Device (1) according to one of Claims 1 to 3, **characterised in that** the structure (5) comprises at least one positioning surface (7) such as an abutment strip (26) intended to be essentially parallel to a face of the related component (4) and/or a sealing surface (27) such as an elastically deformable lip intended to be disposed against the component (4).

5. Device (1) according to one of Claims 1 to 4, **characterised in that** the structure is provided with at least one flush socket (9) comprising it, for example, the opening (11) of the socket (9) opens in the direction of insertion (E) at least at the positioning surface (7) and/or the expansion space (10) is solely bordered by the outer contour of the socket (9) perpendicularly to the direction of insertion (E).

6. Device (1) according to one of Claims 1 to 5, **characterised in that** the structure (5) is provided with at least one socket (9) projecting from a positioning surface (7) close to the latter and at least locally separated from it by the expansion space (10), for example, the outer contour of the socket is intended to expand in a bead to thus form a part of the positioning surface (7) by clamping and/or sealing surface between a base of the expansion space (10) and the recess (17) in the clamping position.

7. Device (1) according to one of Claims 1 to 6, **characterised in that** the expansion space (10) comprises a base (28) essentially perpendicular to the direction of insertion (E), for example, at least one socket (9) has a truncated cross-sectional form, its surface being broader in the vicinity of the base (28) of the expansion space (10) than at its opposite end, in the direction of insertion (E), where the opening possibly opens; the truncated shape may be intended to undergo an increase in its tapering angle during the predetermined outward elastic expansion.

8. Device (1) according to one of Claims 1 to 7, **characterised in that** at least one opening (11) is provided with a cylindrical housing (12) with a longitudinal rectilinear edge essentially parallel to the direction of insertion (E), for example, the housing (12) is undercut-free and/or comprises a base or discharge outlet such that a shank (18) of related mounting means (13), when in tightening position, has its free end at a distance from a base or discharge opening in the direction of insertion (E).

9. Device (1) according to any one of Claims 1 to 8, **characterised in that** it comprises related mounting means (13) such as screws or similar with a shank (18) to be restrained in a housing (12) in the direction of insertion (E), the thread having in parallel section a profile with rounded bevelled edges, for example, from its free insertion end to the opposite end:
■ a thread leading edge (20) essentially at 45° from the inside outwards;
■ a junction (21) of edges with a radius (22) in the order of 0.2- to 0.3-times the diameter, in particular in the order of 0.25-times and/or greater than 2 mm or 3 mm; and
■ a thread trailing edge (23) essentially at 15° from a transverse plane from the outside inwards.

10. Process for assembling at least one related component (4) via an intermediate structure (5) comprising a reversible mounting device (1) according to one of Claims 1 to 9 on an element (3), **characterised in that** it consists in combination of the following steps of:
■ introducing a shank (18) of related mounting means (13) in a direction of insertion (E) by force and with a screwing movement into a socket (9) of the device (1);
■ subjecting the latter (9) by application of force solely to a predetermined elastic expansion without damaging the opening (12);
■ holding this socket under the effect of the expansion into the expansion space (10), so that said socket (9) outwardly abuts against the inside of a recess (17); and possibly
■ causing a truncated shape of the socket (9) to undergo an increase in its tapering angle during the predetermined outward elastic expansion;
while the opening (12) comprises a base or discharge outlet, the shank (18), when in the final clamping position, has its free end at a distance from a base or a discharge opening in the direction of insertion (E).

11. Process according to Claim 10, **characterised in that** the outer contour of the socket (9) undergoes expansion in a bead, thus forming a part of the positioning surface (7) by tightening and/or sealing surface between a base of the expansion space and the recess (17).

12. System (2) assembled by means of at least one device (1) according to one of Claims 1 to 9 and/or using a process according to Claim 10 or 11, **characterised in that** it comprises at least: a related component (4), e.g. a vehicle bodywork frame or accessory; an intermediate structure, e.g. a sealing structure comprising the reversible device (1); and an element (3) such as a window, e.g. the rear window of a vehicle.
